(19) **Europäisches Patentamt European Patent Office Office européen des brevets**

(11) **EP 4 768 295 A1**

(12) **EUROPEAN PATENT APPLICATION**

(43) Date of publication:
01.07.2026 Bulletin 2026/27

(21) Application number: 24223646.1

(22) Date of filing: 30.12.2024

(51) International Patent Classification (IPC):
*B60K 17/16* (2006.01)

(52) Cooperative Patent Classification (CPC):
**B60K 17/165; B60K 1/00;** B60K 2001/001;
F16H 2003/442; F16H 2200/0021; F16H 2200/0043;
F16H 2200/0052; F16H 2200/2035;
F16H 2200/2038

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventor: **FOLKESSON, Johan**
**511 62 SKENE (SE)**

(74) Representative: **Lavoix**
**62, rue de Bonnel**
**69448 Lyon Cedex 03 (FR)**

Remarks:
Amended claims in accordance with Rule 137(2) EPC.

(54) **ELECTRIC DRIVE AXLE WITH A TRANSMISSION COMPRISING TWO PLANETARY GEARSETS AND ASSOCIATED VEHICLE**

(57) The invention concerns an electric drive axle (12), comprising:
- an electric machine (22) with a rotor shaft (28), and
- a transmission (26) comprising :
a. a primary reduction gearset (30) connected to the rotor shaft (28) and comprising a driving gear (34), and
b. a planetary gear transmission (32) comprising :
i. an outer planetary gearset (36) comprising an outer ring gear, an outer planet carrier and an outer sun gear, and
ii. an inner planetary gearset (38) comprising an inner ring gear and an inner sun gear.

The outer ring gear is connected to the driven gear (34) and defines the input of the planetary gear transmission (32).

The inner planetary gearset (38) comprises an inner planet carrier defining the output of the planetary gear transmission (32).

FIG.1

EP 4 768 295 A1

## Description

### TECHNICAL FIELD

The disclosure relates generally to a drive axle of an electric vehicle. In particular aspects, the disclosure relates to the transmission of such an electric drive axle. The disclosure can be applied to automotive vehicles, such as cars, trucks, and buses, among other vehicle types. Although the disclosure may be described with respect to a particular vehicle, the disclosure is not restricted to any particular vehicle.

### BACKGROUND

An axle for an electric vehicle includes generally in one unit an electric machine, a differential, and a transmission to transfer mechanical power between the electric machine and the differential.

Due to the surrounding of other components, such as suspension components for example, the volume available for such a unit, and in particular the lateral width available, is generally restricted.

However, in order to meet always higher requirements of performance and efficiency, the transmission has to provide a wide range of gear ratios, generally leading to a high-volume transmission, which raises a challenge in view of the restricted space available.

One aim of this invention is to solve this challenge, and in particular to propose an electric drive axle with a satisfactory performance, while being compact.

### SUMMARY

According to a first aspect of the disclosure, an electric drive axle comprises:

     i. an electric machine with a rotor shaft, and
     ii. a transmission comprising :

         a. a primary reduction gearset connected to the rotor shaft, the primary reduction gearset comprising a driving gear, and
         b. a planetary gear transmission, the planetary gear transmission comprising :

             i. an outer planetary gearset comprising an outer ring gear, an outer planet carrier and an outer sun gear, and
             ii. an inner planetary gearset comprising an inner ring gear and an inner sun gear;

     the outer ring gear being connected to the driven gear and defining the input of the planetary gear transmission,
     the inner planetary gearset further comprising an inner planet carrier defining the output of the planetary gear transmission.

The first aspect of the disclosure may seek to provide an electric drive axle with a satisfactory performance, while being compact.

In particular, the use of a planetary gear transmission with two gear sets allows providing a wide range of gear ratios, while being compact.

Optionally in some examples, including in at least one preferred example, the planetary gear transmission is at least partly arranged inside the driven gear of the primary reduction gearset.

A technical benefit may include that given the transverse arrangement of the electric machine, the arrangement of the planetary gear transmission inside the driven gear allows reducing the width used, leading to a compacter transmission.

Optionally in some examples, including in at least one preferred example, the electric drive axle further comprises a differential, the inner planet carrier being able to be connected to said differential.

A technical benefit may include that the differential allows the two wheels to be driven at different speeds.

Optionally in some examples, including in at least one preferred example, the outer planetary gearset has two engaged states.

Optionally in some examples, the two engaged states of the outer planetary gearset comprises a first engaged state in which the outer sun gear is fixed.

Optionally in some examples, the two engaged states of the outer planetary gearset comprises a second engaged state, in which the outer planetary gearset is internally locked.

A technical benefit may include the definition of different gear ratios of the outer planetary gearset, thus leading to the definition of satisfactory gear ratios of the planetary transmission.

Optionally in some examples, including in at least one preferred example, the inner planetary gearset has at least two engaged state.

Optionally in some examples, the two engaged states of the inner planetary gearset comprises a first engaged state in which the inner ring gear is fixed, while the inner sun gear is connected to the outer planet carrier.

Optionally in some examples, the two engaged states of the inner planetary gearset comprises a second engaged state, in which the inner planetary gearset is internally locked.

A technical benefit may include the definition of different gear ratios of the inner planetary gearset, thus leading to the definition of satisfactory gear ratios of the planetary transmission.

Optionally in some examples, including in at least one preferred example, the inner planetary gearset has a third engaged state, in which the inner sun gear is fixed, while the inner ring gear is connected to the outer planet carrier.

A technical benefit may include that the transmission is a six-speed transmission.

Optionally in some examples, including in at least one preferred example, the inner sun gear is permanently connected to the outer planet carrier.

A technical benefit may include that the transmission is a four-speed transmission.

Optionally in some examples, including in at least one preferred example, the driven gear is permanently joined to the outer ring gear.

A technical benefit may include assuring the connection between the driven gear and the outer ring gear.

Optionally in some examples, including in at least one preferred example, the outer planetary gearset and/or the inner planetary gearset has at least one neutral state.

A technical benefit may include that the neutral state(s) can be used for rolling while the electric machine is not rotating or is rotating but slower than what would have been allowed in one of the engaged states. The neutral state(s) can also be used to allow the electric machine to rotate at any speed, for example to synchronize the speed of the part of the transmission connected to the electric machine to the speed of the part of the transmission connected to the wheels.

According to a second aspect of the disclosure, a vehicle comprises an electric drive axle as described above.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

BRIEF DESCRIPTION OF THE DRAWINGS

Examples are described in more detail below with reference to the appended drawings.

FIG. 1 is a schematic view of a part of an exemplary vehicle with an electric drive axle according to a first embodiment of the invention, the electric drive axle comprising a six-speed transmission;
FIG. 2 **to** 7 are a schematic partial view of the transmission of Figure 1, each figure depicting a specific gear ratio ; and
FIG. 8 is a schematic partial view of a transmission of an electric drive axle according to a second embodiment of the invention.

**DETAILED DESCRIPTION**

The detailed description set forth below provides information and examples of the disclosed technology with sufficient detail to enable those skilled in the art to practice the disclosure.

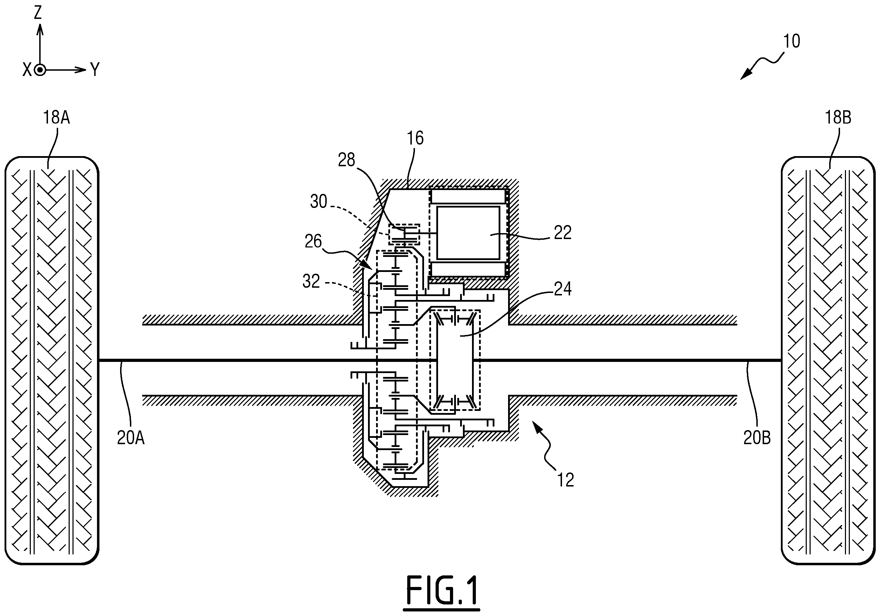

Figure 1 shows partly an exemplar vehicle 10.

The vehicle 10 is for example a motor vehicle, and in particular an automotive vehicle, such as a car, a bus or a truck.

Preferably, the vehicle 10 is an electrical vehicle.

For clarity reasons, we define a longitudinal axis X, corresponding for example to the front-back axis during normal use of the vehicle, i.e. when the vehicle is in motion, e.g. rolling on the road. We define also a transversal axis Y corresponding for example to the left-right axis during normal use of the vehicle and an elevation axis Z corresponding for example to the up-down axis during normal use of the vehicle.

The vehicle 10 comprises at least one electrical drive axle 12.

In some examples, the vehicle 10 also comprises a housing 16 configured to house the electric drive axle 12 as shown on Figure 1.

In some examples, the housing 16 is connected to the chassis of the vehicle 10 via suspension members (not shown).

In some examples, the vehicle 10 also comprises at least two wheels 18A, 18B, and for example, four wheels.

The two wheels shown on Figure 1 are for example the rear wheels 18A, 18B of the vehicle 10.

In particular, these two rear wheels 18A, 18B are spaced from each other according to the transversal axis Y.

In the particular example shown on Figure 1, the electric drive axle 12 extends transversally between the two rear wheels 18A, 18B.

In some examples, the electric drive axle 12 is arranged inside the housing 16.

The electric drive axle 12 comprises an electric machine 22 and at least one transmission 26, and preferably also a differential 24. The electric machine 22 comprises a rotor shaft 28, preferably on which a gear is machined or attached.

In some examples, the electric machine 22 is an electric motor adapted to generate a rotating torque.

The rotor shaft 28 extends according to a rotor shaft axis.

In some examples, the rotor shaft axis is parallel to the transversal axis Y.

More preferably, in some examples, the rotor shaft 28 is a rotating shaft movable in rotation around its axis.

In a conventional manner, the differential 24 comprises two separate drive shafts 20A, 20B.

Each one of the drive shafts 20A, 20B extends in particular according to an axis parallel to the transversal axis Y.

For example, each one of the drive shafts 20A, 20B is movable in rotation around its axis.

Preferably, each one of the drive shafts 20A, 20B is connected to one of the wheels 18A, 18B, in particular such that the rotation of said drive shaft 20A, 20B leads to a rotation of the corresponding wheel 18A, 18B.

In a conventional manner, the differential 24 is preferably configured such that the two drive shafts 20A, 20Bcan rotate at different speeds, thus allowing different rotating speeds of the wheels 18A, 18B.

The transmission 26 comprises a primary reduction gearset 30 and a planetary gear transmission 32.

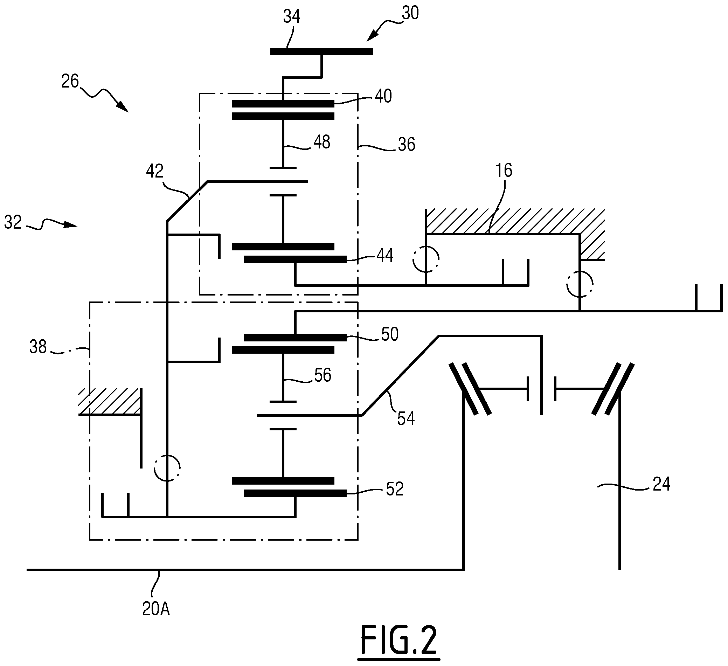

Figures 2 to 7 show an upper section of the transmission 26.

The primary reduction gearset 30 is connected to the rotor shaft 28 of the electric machine 22.

The primary reduction gearset 30 comprises a driven gear 34.

In some examples, the driven gear 34 extends around the transversal axis Y, as for example shown in Figure 1.

More precisely, the driven gear 34 is a solid of revolution around said transversal axis Y.

In particular, the driven gear 34 is movable in rotation around the transversal axis Y.

In a preferred manner, the driven gear 34 is permanently engaged to the rotor shaft 28.

More particularly, the driven gear 34 is driven by the gear connected to or being part of the rotor shaft 28.

In other words, in some examples, the teeth of the driven gear 34 cooperates with the gear of the rotor shaft 28, such that a rotation of the rotor shaft 28 around its axis leads to a corresponding rotation of the driven gear 34 around the transversal axis Y.

The planetary gear transmission 32 comprises an outer planetary gearset 36 and an inner planetary gearset 38.

In a preferred manner, the planetary gear transmission 32 does not comprise any other gearset than the outer planetary gearset 36 and the inner planetary gearset 38.

The planetary gear transmission 32 is preferably at least partly arranged inside the driven gear 34 of the primary reduction gearset 30.

In other words, as visible on the Figures, the driven gear 34 is for example arranged around the planetary transmission 32, and in particular encompasses the outer planetary gearset 36 and the inner planetary gearset 38.

Each of the outer planetary gearset 36 and the inner planetary gearset 38 is preferably an epicyclical gear train.

In some examples, the outer planetary gearset 36 and the inner planetary gearset 38 are coaxial, as for example shown in Figure 1.

The outer planetary gearset 36 comprises an outer ring gear 40, an outer planet carrier 42 and an outer sun gear 44.

More precisely, the outer ring gear 40 is a ring centered on the transversal axis Y and preferably with teeth defined inside the ring.

The outer ring gear 40 has for example $Z_{RO}$ teeth.

The outer ring gear 40 defines the input of the planetary gear transmission 32, and in particular is connected to the rotor shaft 28 of the electric machine 22 via the driven gear 34.

In particular, the outer ring gear 40 is connected to the driven gear 34.

In some examples, the outer ring gear 40 is permanently joined to the driven gear 34 of the primary reduction gearset 30, in particular such that a rotation of the driven gear 34 leads to a corresponding rotation of the outer ring gear 40.

In some preferred examples, the outer ring gear 40 and the driven gear 34 of the primary reduction gearset 30 are formed by the same component, in particular a ring centered on the transversal axis Y with external teeth meshing with the teeth of the of the rotor shaft 28 of the electric machine 22 and with $Z_{RO}$ internal teeth.

In some examples, the outer sun gear 44 is a ring centered on the transversal axis Y and preferably with teeth defined outside said ring

The outer sun gear 44 has for example $Z_{so}$ teeth.

In some examples, the outer planet carrier 42 carries at least one planet gear 48, and for example four planet gears 48. The planet gear(s) 48 is/are configured to engage with both the outer ring gear 40 and the outer sun gear 44, and in particular to roll inside the outer ring gear 40 and outside the outer sun gear 44.

In some examples, the outer planetary gearset 36 has two engaged states.

In particular, in the exemplar embodiment shown on Figures 1 to 7, the outer planetary gearset 36 has a first engaged state, shown on Figures 2, 4 and 5, in which the outer sun gear 44 is fixed.

In this first engaged state of the outer planetary gearset 36, the outer sun gear 44 is for example connected to the one of the walls of the housing 16, thus fixing it in position.

In particular, in this first engaged state of the outer planetary gearset 36, the outer sun gear 44 cannot rotate.

More precisely, the speed ratio $R_{O,1}$ of the outer planetary gearset 36 in its first engaged state is equal to :

$$R_{O,1} = 1 + \frac{z_{SO}}{z_{RO}}$$

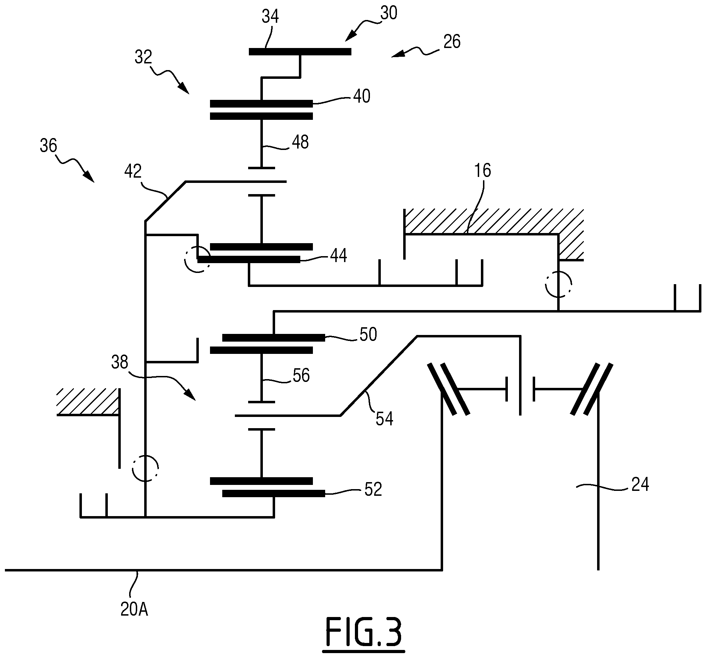

In particular, in the exemplar embodiment shown on Figures 1 to 7, the outer planetary gearset 36 has a second engaged state, shown on Figures 3, 6 and 7, in which the outer planetary gearset 36 is internally locked.

The outer planetary gearset 36 is internally locked preferably by connecting the outer sun gear 44 to the outer planet carrier 42 as shown on Figures 3, 6 and 7. Alternatively, the outer sun gear 44 is connected to the outer ring gear 40.

More precisely, the speed ratio $R_{O,2}$ of the outer planetary gearset 36 in its second engaged state is equal to 1.

In some examples, the outer planetary gearset 36 also have at least one neutral state.

The inner planetary gearset 38 comprises an inner ring gear 50, an inner sun gear 52 and an inner planet carrier 54.

More precisely, the inner ring gear 50 is a ring centered on the transversal axis Y, and preferably with teeth defined inside the ring.

The inner ring gear 50 has for example $Z_{RI}$ teeth.

In some examples, the inner sun gear 52 is a ring centered on the transversal axis Y, and preferably with teeth defined outside said ring.

The inner sun gear 52 has for example Zsi teeth.

The inner planet carrier 54 defines the output of the planetary gear transmission 32, and more particular is connected to the pair of wheels 18A, 18B, notably via the differential 34 in the particular embodiment shown on the Figures.

In some examples, as shown on the Figures, the inner planet carrier 54 is connected to the differential 24.

Alternatively, the inner planet carrier 54 is connected to a single wheel.

In some examples, the inner planet carrier 54 carries at least one planet gear 56, and for example four planet gears 56. The planet gear(s) 56 is/are configured to engage with both the inner ring gear 50 and the inner sun gear 52 and in particular to roll inside the inner ring gear 50 and outside the inner sun gear 52.

In some examples, the inner planetary gearset 38 has at least two engaged states, and more preferably, three engaged states in the first embodiment shown in Figures 1 to 7.

In particular, the inner planetary gearset 38 has a first engaged state, shown on Figures 2 and 3, in which the inner ring gear 50 is fixed, while the inner sun gear 52 is connected to the outer planet carrier 42.

In this first engaged state of the inner planetary gearset 38, the inner ring gear 50 is for example connected to one of the walls of the housing 16, thus fixing it in position.

More particularly, in this first engaged state of the inner planetary gearset 38, the inner sun gear 52 is connected to the outer planet carrier 42.

In particular, in this first engaged state, the inner ring gear 50 cannot rotate, while the inner sun gear 52 acts as input of the inner planetary gearset 38.

More precisely, the speed ratio Ri,i of the inner planetary gearset 38 in its first engaged state is equal to :

$$R_{I,1} = 1 + \frac{z_{RI}}{z_{SI}}$$

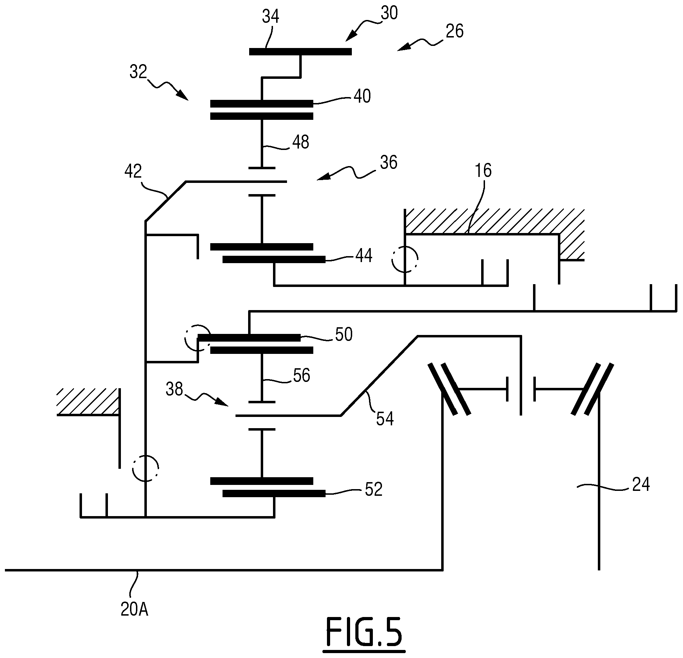

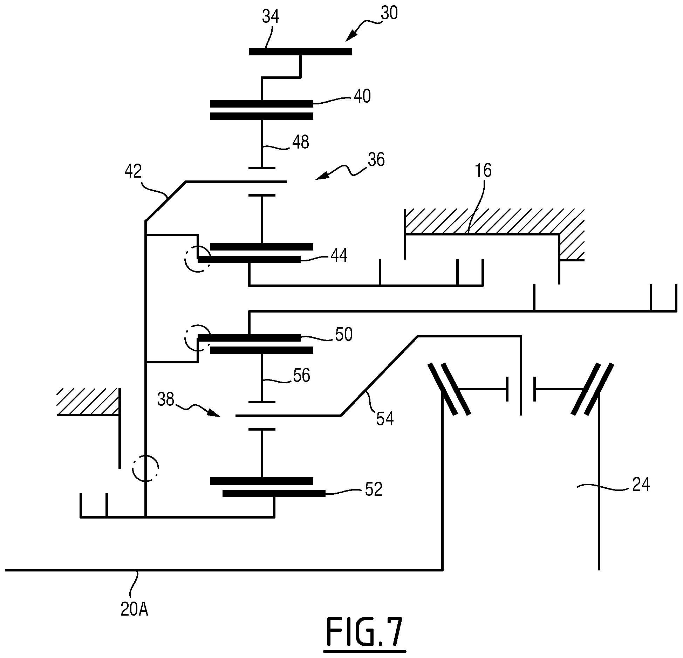

In particular, in the exemplar embodiment shown on Figures 1 to 7, the inner planetary gearset 38 has a second engaged state, shown on Figures 5 and 7, in which the inner planetary gearset 38 is internally locked, preferably while the inner sun gear 52 is connected to the outer planet carrier 42.

The inner planetary gearset 38 is internally locked preferably by connecting both the inner sun gear 52 and the inner ring gear 50 to the outer planet carrier 42 as shown on Figures 5 and 7.

More precisely, the speed ratio $R_{I,2}$ of the inner planetary gearset 38 in its second engaged state is equal to 1.

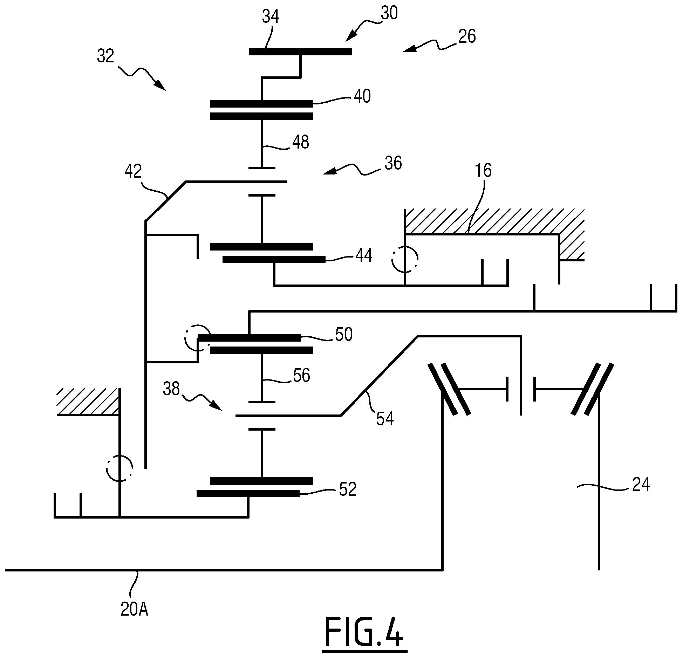

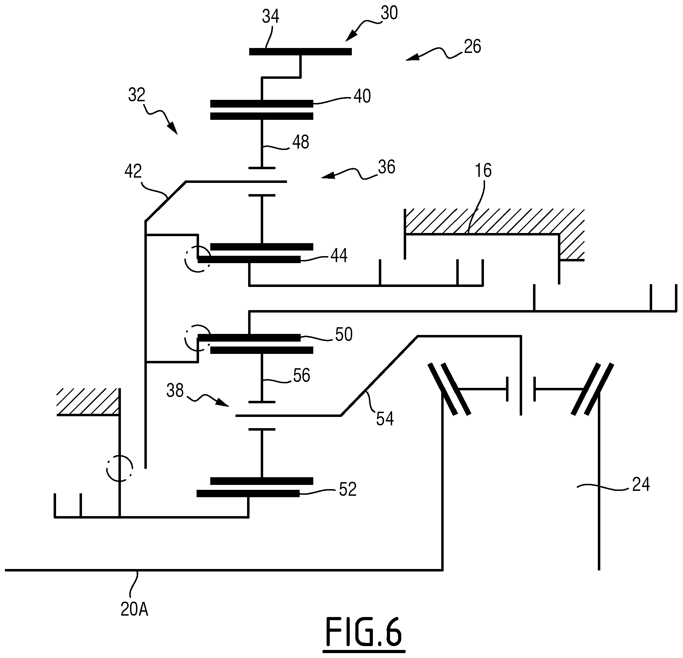

In some examples, the inner planetary gearset 38 has a third engaged state, shown on Figures 4 and 6, in which the inner sun gear 52 is fixed, while the inner ring gear 50 is connected to the outer planet carrier 42.

In this third engaged state, the inner sun gear 52 is for example connected to one of the walls of the housing 16, thus fixing it in position.

In particular, in this third engaged state of the inner planetary gearset 38, the inner sun gear 52 cannot rotate, while the inner ring gear 50 acts as input of the inner planetary gearset 38.

More precisely, the speed ratio $R_{I,3}$ of the inner planetary gearset 38 in the third engaged state is equal to : $R_{I,3} = 1 + \frac{z_{SI}}{z_{RI}}$

In some examples, the inner planetary gearset 38 also have at least one neutral state.

As visible on Figure 1, the planetary gear transmission 32 connects the primary reduction gearset 30, and in particular its driven gear 34, and the differential 24.

More precisely, the planetary gear transmission 32 is configured to transmit the rotation of the driven gear 34 of the primary reduction gearset 30 to the differential 24 with a specific gear ratio $R_j$.

In the particular embodiment shown on Figures 1 to 7, the planetary gear transmission 32 is a six speed-transmission.

More precisely, the planetary gear transmission 32 is adapted to have six different gear ratios $R_j$, with j comprised between 1 and 6, in particular depending on the engaged state of the inner planetary gearset 38 and of the outer planetary gearset 36 as shown on Figures 2 to 7.

In particular, the gear ratio $R_j$ of the planetary gear transmission 32 is equal to the multiplication of the speed ratio $R_I$ of the inner planetary gearset 38 and the speed ratio $R_O$ of the outer planetary gearset 36.

Figure 2 shows the first speed of the planetary gear transmission 32 of the first embodiment.

In this first speed, the outer planetary gear set 36 is in its first engaged state and the inner planetary gearset 38 is in also its first engaged state.

The first gear ratio Ri of the planetary gear transmission 32 in the first speed is thus equal to

$$R_1 = R_{I,1} \times R_{O,1} = \left(1 + \frac{z_{RI}}{z_{SI}}\right) \times \left(1 + \frac{z_{SO}}{z_{RO}}\right)$$

.

Figure 3 shows the second speed of the planetary gear transmission 32 of the first embodiment.

In this second speed, the outer planetary gear set 36 is in its second engaged state and the inner planetary gearset 38 is in its first engaged state.

The second gear ratio $R_2$ of the planetary gear transmission 32 in the second speed is thus equal to

$$R_2 = R_{I,1} \times R_{O,2} = \left(1 + \frac{z_{RI}}{z_{SI}}\right) \times 1 .$$

Figure 4 shows the third speed of the planetary gear transmission 32 of the first embodiment.

In this third speed, the outer planetary gear set 36 is in its first engaged state and the inner planetary gearset 38 is in its third engaged state.

The third gear ratio $R_3$ of the planetary gear transmission 32 in the third speed is thus equal to

$$R_3 = R_{I,3} \times R_{O,1} = \left(1 + \frac{z_{SI}}{z_{RI}}\right) \times \left(1 + \frac{z_{SO}}{z_{RO}}\right)$$

.

Figure 5 shows the fourth speed of the planetary gear transmission 32 of the first embodiment.

In this fourth speed, the outer planetary gear set 36 is in its first engaged state and the inner planetary gearset 38 is in its second engaged state.

The fourth gear ratio $R_4$ of the planetary gear transmission 32 in the fourth speed is thus equal to

$$R_4 = R_{I,2} \times R_{O,1} = 1 \times \left(1 + \frac{z_{SO}}{z_{RO}}\right) .$$

Figure 6 shows the fifth speed of the planetary gear transmission 32 of the first embodiment.

In this fifth speed, the outer planetary gear set 36 is in its second engaged state and the inner planetary gearset 38 is in its third engaged state.

The fifth gear ratio $R_5$ of the planetary gear transmission 32 in the fifth speed is thus equal to

$$R_5 = R_{I,3} \times R_{O,2} = \left(1 + \frac{z_{SI}}{z_{RI}}\right) \times 1 .$$

Figure 7 shows the sixth speed of the planetary gear transmission 32 of the first embodiment.

In this sixth speed, the outer planetary gear set 36 is in its second engaged state and the inner planetary gearset 38 is in its second engaged state.

The sixth gear ratio $R_6$ of the planetary gear transmission 32 in the sixth speed is thus equal to $R_6 = R_{I,2} \times R_{O,2} = 1 \times 1$ .

An exemplar use of the electric drive axle 12 as described above in the vehicle 10 to transmit the rotating torque of the electric machine 22 to the wheels 18A, 18B will be described below.

The electric machine 22 generates a rotating torque, leading in particular to a rotation of the rotor shaft 28.

As described above, the rotation of the rotor shaft 28 leads to a rotation of the primary reduction gearset 30, and in particular of its driven gear 34.

Then, the planetary gear transmission 32 transmits the rotation of the driven gear 34 of the primary reduction gearset 30 to the differential 24 with the specific gear ratio $R_j$ of the configured speed.

For example, the differential 24 thus transmits the rotation to the wheels 18A, 18B, and if necessary with two different rotating speed via the two drive shafts 20A, 20B.

Such an electric drive axle 12 is particularly advantageous, and in particular provides satisfactory performance, while being compact.

In particular, the use of a planetary gear transmission 32 with two gearsets 36,38 allows providing a wide range of gear ratios, and thus a satisfactory performance

Furthermore, the transverse arrangement of the electric machine 22, as well as the arrangement of the planetary gear transmission 32 inside the driven gear 34 lead to a reduction of the width used.

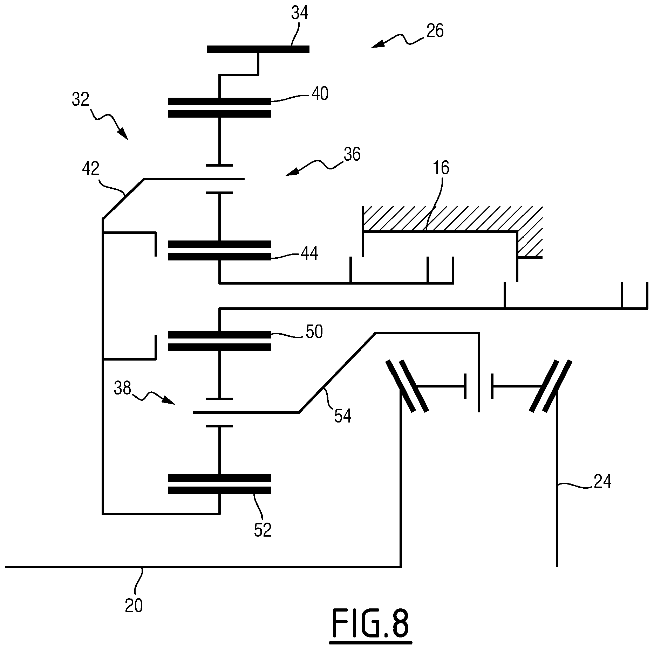

Figure 8 shows a second embodiment of the invention.

This second embodiment differs from the first embodiment described above in that the inner sun gear 52 is permanently connected to the outer planet carrier 42, as visible on Figure 8.

In particular, the inner planetary gearset 38 only has two engaged states, i.e. the first engaged state and the second engaged state described above.

More particularly, the planetary gear transmission 32 of this second embodiment is a four-speed transmission.

More precisely, the planetary gear transmission 32 is adapted to have four different gear ratios $R_j$, with j comprised between 1 and 4.

In particular, the first, second, fourth and sixth speed described for the first embodiment corresponds the four speeds of the planetary gear transmission 32 of the second embodiment.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electric drive axle (12), comprising:

   i. an electric machine (22) with a rotor shaft (28), and
   ii. a transmission (26) comprising :

   a. a primary reduction gearset (30) connected to the rotor shaft (28), the primary reduction gearset (30) comprising a driving gear (34), and
   b. a planetary gear transmission (32), the planetary gear transmission (32) comprising :

   i. an outer planetary gearset (36) comprising an outer ring gear (40), an outer planet carrier (42) and an outer sun gear (44), and
   ii. an inner planetary gearset (38) comprising an inner ring gear (50) and an inner sun gear (52);

the outer ring gear (40) being connected to the driven gear (34) and defining the input of the planetary gear transmission (32),
the inner planetary gearset (38) further comprising an inner planet carrier (54) defining the output of the planetary gear transmission (32).

2. The electric drive axle (12) of claim 1, in which the planetary gear transmission (32) is at least partly arranged inside the driven gear (34) of the primary reduction gearset (30).

3. The electric drive axle (12) of claim 1 or 2, further comprising a differential (24), the inner planet carrier (54) being able to be connected to said differential (24).

4. The electric drive axle (12) of any of claims 1 to 3, in which the outer planetary gearset (36) has two engaged states.

5. The electric drive axle (12) of claim 4, in which the two engaged states of the outer planetary gearset (36) comprises a first engaged state in which the outer sun gear (44) is fixed.

6. The electric drive axle (12) of claim 4 or 5, in which the two engaged states of the outer planetary gearset (36) comprises a second engaged state, in which the outer planetary gearset (36) is internally locked.

7. The electric drive axle (12) of any of claims 1 to 6, in which the inner planetary gearset (38) has at least two engaged state.

8. The electric drive axle (12) of claim 7, in which the two engaged states of the inner planetary gearset (38) comprises a first engaged state in which the inner ring gear (50) is fixed, while the inner sun gear (52) is connected to the outer planet carrier (42).

9. The electric drive axle (12) of claim 7 or 8, in which the two engaged states of the inner planetary gearset (38) comprises a second engaged state, in which the inner planetary gearset (38) is internally locked.

10. The electric drive axle (12) of any of claims 7 to 9, in which the inner planetary gearset (38) has a third engaged state, in which the inner sun gear (52) is fixed, while the inner ring gear (50) is connected to the outer planet carrier (42).

11. The electric drive axle (12) of any of claims 7 to 9, in which the inner sun gear (52) is permanently connected to the outer planet carrier (42).

12. The electric drive axle (12) of any of claims 1 to 11, in which the driven gear (34) is permanently joined to the outer ring gear (40).

13. The electric drive axle (12) of any of claims 1 to 12, in which the outer planetary gearset (36) and/or the inner planetary gearset (38) has at least one neutral state.

14. Vehicle (10) comprising the electric drive axle (12) of any of claims 1 to 13.

**Amended claims in accordance with Rule 137(2) EPC.**

1. An electric drive axle (12), comprising:

    i. an electric machine (22) with a rotor shaft (28), and
    ii. a transmission (26) comprising :

        a. a primary reduction gearset (30) connected to the rotor shaft (28), the primary reduction gearset (30) comprising a driven gear (34), and
        b. a planetary gear transmission (32), the planetary gear transmission (32) comprising:

            - an outer planetary gearset (36) comprising an outer ring gear (40), an outer planet carrier (42) and an outer sun gear (44), and
            - an inner planetary gearset (38) comprising an inner ring gear (50) and an inner sun gear (52);

        the outer planetary gearset (36) and the inner planetary gearset (38) being coaxial;
        the outer ring gear (40) being connected to the driven gear (34) and defining the input of the planetary gear transmission (32),
        the inner planetary gearset (38) further comprising an inner planet carrier (54) defining the output of the planetary gear transmission (32);
        **characterizing in that** the outer planetary gearset (36) has two engaged states; the two engaged states of the outer planetary gearset (36) comprising a first engaged state in which the outer sun gear (44) is fixed and a second engaged state, in which the outer planetary gearset (36) is internally locked.

2. The electric drive axle (12) of claim 1, in which the planetary gear transmission (32) is at least partly arranged inside the driven gear (34) of the primary reduction gearset (30), the driven gear (34) encompassing the outer planetary gearset (36) and the inner planetary gearset (38).

3. The electric drive axle (12) of claim 1 or 2, further comprising a differential (24), the inner planet carrier (54) being able to be connected to said differential (24).

4. The electric drive axle (12) of any of claims 1 to 3, in which the inner planetary gearset (38) has at least two engaged state.

5. The electric drive axle (12) of claim 4, in which the two engaged states of the inner planetary gearset (38) comprises a first engaged state in which the inner ring gear (50) is fixed, while the inner sun gear (52) is connected to the outer planet carrier (42).

6. The electric drive axle (12) of claim 4 or 5, in which the two engaged states of the inner planetary gearset (38) comprises a second engaged state, in which the inner planetary gearset (38) is internally locked.

7. The electric drive axle (12) of any of claims 4 to 6, in which the inner planetary gearset (38) has a third engaged state, in which the inner sun gear (52) is fixed, while the inner ring gear (50) is connected to the outer planet carrier (42).

8. The electric drive axle (12) of any of claims 4 to 6, in which the inner sun gear (52) is permanently connected to the outer planet carrier (42).

9. The electric drive axle (12) of any of claims 1 to 8, in which the driven gear (34) is permanently joined to the outer ring gear (40).

10. The electric drive axle (12) of any of claims 1 to 9, in which the outer planetary gearset (36) and/or the inner planetary gearset (38) has at least one neutral state.

11. Vehicle (10) comprising the electric drive axle (12) of any of claims 1 to 10.

FIG.1

FIG.2

FIG.3

FIG.4

FIG.5

FIG.6

EP 4 768 295 A1

## FIG.7

FIG.8

Europäisches
Patentamt

European
Patent Office

Office européen
des brevets

# EUROPEAN SEARCH REPORT

**Application Number**

EP 24 22 3646

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 339 388 A (ZAHNRADFABRIK FRIEDRICHSHAFEN) 10 November 2017 (2017-11-10) | 1-4,6,7, 9,10,14 | INV. B60K17/16 |
| A | * figures 1-3 * | 11 | |
| X | US 5 919 111 A (PARK DONG HOON [KR]) 6 July 1999 (1999-07-06) | 1-5,7-9, 13,14 | |
| A | * column 1, lines 56-62; figures 1,2 * | 11 | |
| X | US 10 760 653 B2 (DAIMLER AG [DE]) 1 September 2020 (2020-09-01) | 1,2,4,6, 12,14 | |
| A | * figures 1,3 * | 11 | |

**TECHNICAL FIELDS SEARCHED (IPC)**

B60K
F16H

The present search report has been drawn up for all claims

| Place of search | Date of completion of the search | Examiner |
|---|---|---|
| Munich | 11 June 2025 | Martínez Hurtado, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 3646

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2025

| Patent document cited in search report | | Publication date | Patent family member(s) | | Publication date |
|---|---|---|---|---|---|
| CN 107339388 | A | 10-11-2017 | CN | 107339388 A | 10-11-2017 |
| | | | DE | 102016207445 A1 | 02-11-2017 |
| US 5919111 | A | 06-07-1999 | DE | 19737418 A1 | 05-03-1998 |
| | | | JP | H1089424 A | 07-04-1998 |
| | | | KR | 19980016992 A | 05-06-1998 |
| | | | US | 5919111 A | 06-07-1999 |
| US 10760653 | B2 | 01-09-2020 | CN | 110087927 A | 02-08-2019 |
| | | | DE | 102017004931 A1 | 21-06-2018 |
| | | | DE | 102017004932 A1 | 21-06-2018 |
| | | | EP | 3558734 A1 | 30-10-2019 |
| | | | US | 2020063834 A1 | 27-02-2020 |
| | | | WO | 2018114029 A1 | 28-06-2018 |

EPO FORM P0459

For more details about this annex : see Official Journal of the European Patent Office, No. 12/82